# EUROPÄISCHE PATENTANMELDUNG

(11) **EP 1 770 114 A1**
(43) Veröffentlichungstag der Anmeldung: **04.04.2007**
(21) Anmeldenummer: 06119974.1
(22) Anmeldetag: 01.09.2006
(51) Int. Cl.: C08J 5/00

(54) **Schalldämmplatte auf Basis von Styrol**

(30) Priorität: 29.09.2005 DE 102005046817
(71) Anmelder: BASF AKTIENGESELLSCHAFT, 67056 Ludwigshafen (DE)
(72) Erfinder: DeArmitt, Chris, 68161, Mannheim (DE); Knoll, Konrad, 68199, Mannheim (DE); Huber, Robert, 67117, Limburgerhof (DE)

(57) **Zusammenfassung**

Die Erfindung betrifft eine Schalldämmplatte, die im wesentlichen aus
A) 25 bis 95 Gew.-% eines thermoplastischen Elastomeren auf Basis von Styrol (S-TPE),
B) 5 bis 75 Gew.-% eines anorganischen Füllstoffes,
C) 0 bis 35 Gew.-% eines von A) verschiedenen elastomeren Polymers,
D) 0 bis 10 Gew.-% eines Plastifizierungs- oder Dispergierhilfsmittels,

wobei die Summe aus A), B), C) und D) 100 Gew.-% ergeben.

## Beschreibung

Die Erfindung betrifft eine Schalldämmplatte, die im wesentlichen aus
A) 25 bis 95 Gew.-% eines thermoplastischen Elastomeren auf Basis von Styrol (S-TPE),
B) 5 bis 75 Gew.-% eines anorganischen Füllstoffes,
C) 0 bis 35 Gew.-% eines von A) verschiedenen elastomeren Polymers,
D) 0 bis 10 Gew.-% eines Plastifizierungs- oder Dispergierhilfsmittels,
wobei die Summe aus A), B), C) und D) 100 Gew.-% ergeben,
besteht, sowie deren Verwendung zur Kaschierung auf Lautsprecher-, Elektrogeräte- oder Kfz-Gehäusen oder Gehäuseteilen.

Zur Schall- und Vibrationsdämmung von Spül- oder Waschmaschinen, werden in der Regel Matten auf Grundlage von Bitumen eingesetzt. Zur Schallisolierung in Kraftfahrzeugen werden häufig auch Matten auf Basis von Ethylvinylacetat verwendet, die beispielsweise mit Magnetit gefüllt sind.

Die deutsche Offenlegungsschrift DT 2214282 beschreibt schalldämmende und wärmeisolierende Matten für Kraftfahrzeuge auf Basis eines mit Schwerspat hochgefüllten Elastomeren, das anschließend vulkanisiert wird.

Die FR 1454270 beschreibt schalldämmende Matten auf Basis einer mit Calciumcarbonat gefüllten Bitumenmasse, die mit einem Styrolbutadien-Copolymer modifiziert wurde.

Für schall- und vibrationsdämmende Matten für technisch anspruchsvolle Anwendungen, beispielsweise für Lautsprechergehäuse, werden Materialien benötigt, die ein konstantes Schalldämmungsvermögen über einen weiten Frequenzbereich bei unterschiedlichen Temperaturen und Umgebungsbedingungen aufweisen.

Aufgabe der vorliegenden Erfindung war es, den genannten Nachteilen abzuhelfen und eine Schalldämmplatte zu finden, die insbesondere über einen weiten Temperatur- und Frequenzbereich konstant gute Schall- und Schwingungsdämpfungseigenschaften aufweist.

Demgemäß wurde die obengenannte Schalldämmplatte gefunden.

Besonderes bevorzugt besteht die Schalldämmplatte aus
A) 40 bis 80 Gew.-% eines thermoplastischen Elastomeren auf Basis von Styrol (S-TPE),
B) 20 bis 60 Gew.-% eines organischen oder anorganischen Füllstoffes,
C) 1 bis 20 Gew.-% eines elastomeren Polymers mit einem E-Modul von 1000 Mpa oder weniger
D) 0,1 bis 5 Gew.-% eines Plastifizierungs- oder Dispergierhilfsmittels,
wobei die Summe aus A), B), C) und D) 100 Gew.-% ergibt.

### Komponente A

Bevorzugt weist das S-TPE eine Reißdehnung von mehr als 300 %, besonders bevorzugt mehr als 500 %, insbesondere mehr als 600 %, gemessen nach ISO 527, auf und wird in einer Menge im Bereich von 40 bis 95 Gew.-%, bevorzugt 60 bis 80 Gew.-%, bezogen auf die Stretchfolie, zugemischt. Besonders bevorzugt mischt man als S-TPE ein lineares oder sternförmiges Styrol-Butadien-Blockcopolymer mit außenliegenden Polystyrolblöcken S und dazwischenliegenden Styrol-Butadien-Copolymerblöcken mit statistischer Styrol/Butadien-Verteilung (S/B)_{random} oder einem Styrolgradienten (S/B)ₜₐₚₑᵣ zu.

Der Gesamtbutadiengehalt liegt bevorzugt im Bereich von 15 bis 50 Gew.-%, besonders bevorzugt im Bereich von 25 bis 40 Gew.-%, der Gesamtstyrolgehalt liegt entsprechend bevorzugt im Bereich von 50 bis 85 Gew.-%, besonders bevorzugt im Bereich von 60 bis 75 Gew.-%.

Vorzugsweise besteht der Styrol-Butadien-Block (S/B) aus 30 bis 75 Gew.-% Styrol und 25 bis 70 Gew.-% Butadien. Besonders bevorzugt hat ein Block (S/B) einen Butadienanteil von 35 bis 70 Gew.-% und einen Styrolanteil von 30 bis 65 Gew-%.

Der Anteil der Polystyrolblöcke S liegt bevorzugt im Bereich von 5 bis 40 Gew.-%, insbesondere im Bereich von 25 bis 35 Gew.-%, bezogen auf das gesamte Blockcopolymer. Der Anteil der Copolymerblöcke S/B liegt bevorzugt im Bereich von 60 bis 95 Gew.-%, insbesondere im Bereich von 65 bis 75 Gew.-%.

Besonders bevorzugt sind lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 - 16 %.

### Komponente B

Als anorganische Füllstoffe kommen zum Beispiel Titandioxid, Talk, Kreide, Kaolin, Ruß, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Wollastonit, Glimmer, Magnetite, Zinkoxid oder Farbpigmente in Betracht. Geeignet sind auch Metalle, insbesondere Schwermetalle wie Blei, Eisen, z. B. Carbonyleisen.

### Komponente C

Als Komponente C kann die Schalldämmplatte 0 bis 35, bevorzugt 1 bis 20 Gew.-% eines von A) verschiedenen elastomeren Polymers enthalten. Vorzugsweise weist das elastomere Polymer ein E-Modul von 1000 MPa oder weniger auf. Geeignet hierfür sind wachsartige Polymere mit niedriger Kristallinität, beispielsweise Polyethylen (PE), Ethylen-Propylen-Kautschuke, EPDM-Kautschuke oder Ethylenvinylacetat (EVA).

### Komponente D

Als Komponente D kann die Schalldämmplattte 0 bis 10 Gew.-%, insbesondere 0,1 bis 5 Gew.-% eines Plastifizierungs- oder Dispergierhilfsmittels enthalten.

Geeignete Plastifizierungsmittel sind parafinische oder naphthenische Öle, beispielsweise Weißöl oder Phthalate, wie Düsooctylphthalat. Daneben können auch Pflanzenöle, wie Sonnenblumenöl, oder Mischungen aus Pflanzenölen und Weißöl als Plastifizierungsmittel verwendet werden.

Über die Menge des Plastifizierungsmittels können Härte und Fließfähigkeit der Masse für die Schalldämmplatte in weiten Bereichen eingestellt werden.

Zur Dispergierung des anorganischen Füllstoffes können ferner übliche Dispergiermittel, wie niedermolekulare Wachse, z.B. Polyethylenwachse oder Stearate, wie Magnesium- oder Calciumstearat zugesetzt werden.

Die Schalldämmplatte kann durch Mischen der Komponenten A bis D in der Schmelze und anschließend Extrusion hergestellt werden.

Durch Zugabe von chemischen oder physikalischen Treibmitteln in die Polymerschmelze kann auch eine geschäumte Schalldämmplatte erhalten werden.

Die Schalldämmplatte weist in der Regel eine Schichtdicke von 0,1 bis 10 mm, bevorzugt im Bereich von 1 bis 5 mm auf.

Zur einfacheren Befestigung an den Gerätegehäusen wird die Schalldämmplatte vorzugsweise mit einer Klebeschicht versehen. Des weiteren kann die Schalldämmplatte mit einer Schaumschicht, beispielsweise auf Basis von Polyurethan- oder Melamin/Formaldehyd-Schaumstoffen versehen werden. Zum Schutz der Schalldämmplatte kann eine Polymerfolie, beispielsweise aus Polyvinylchlorid oder Polyethylen aufgebracht werden.

Die erfindungsgemäße Schalldämmplatte eignet sich zur Kaschierung von verschiedenen Gehäusen oder Gehäuseteilen, beispielsweise Lautsprecher-, Elektrogeräte- oder Kraftfahrzeugteilen. Aufgrund der geringen Wasserabsorption sind die Schalldämmplatten äußerst unempfindlich gegenüber Umwelteinflüssen, wie Feuchtigkeit. Aufgrund der guten Schalldämmeigenschaften über einen weiten Frequenzbereich eignen sie sich insbesondere für Anwendungen im HiFi-Bereich.

## Patentansprüche

1. Schalldämmplatte, bestehend im wesentlichen aus
A) 25 bis 95 Gew.-% eines thermoplastischen Elastomeren auf Basis von Styrol (S-TPE),
B) 5 bis 75 Gew.-% eines anorganischen Füllstoffes,
C) 0 bis 35 Gew.-% eines von A) verschiedenen elastomeren Polymeren,
D) 0 bis 10 Gew.-% eines Plastifizierungs- oder Dispergierhilfsmittels,
wobei die Summe aus A), B), C) und D) 100 Gew.-% ergeben.

2. Schalldämmplatte nach Anspruch 1, **dadurch gekennzeichnet, dass** sie als Komponente A) ein Styrol-Butadien-Blockcopolymer der Struktur S-(S/B)-S, wobei S für einen Polystyrolblock und S/B für einen Styrol-Butadien-Copolymerblock steht, enthält.

3. Schalldämmplatte nach Anspruch 2, **dadurch gekennzeichnet, dass** der Styrol- Butadien-Copolymerblock S/B der Komponente A) eine statistische Verteilung der Styrol- und Butadieneinheiten aufweist.

4. Schalldämmplatte nach einem der Ansprüche 1 bis 3, **dadurch gekennzeichnet, dass** die Komponente A) aus 15 bis 50 Gew.-% Butadien und 50 bis 85 Gew.-% Styrol aufgebaut ist.

5. Schalldämmplatte nach einem der Ansprüche 3 bis 5, **dadurch gekennzeichnet, dass** der Styrol-Butadien-Copolymerblock (S/B) der Komponente A) aus 30 bis 70 Gew.-% Styrol und 25 bis 70 Gew.-% Butadien aufgebaut ist.

6. Schalldämmplatte nach einem der Ansprüche 2 bis 5, **dadurch gekennzeichnet, dass** der Anteil der Polystyrolblöcke S im Bereich von 5 bis 40 Gew.-%, bezogen auf die Komponente A), liegt.

7. Schalldämmplatte nach einem der Ansprüche 2 bis 6, **dadurch gekennzeichnet, dass** der 1,2-Vinylgehalt im Styrol-Butadien-Copolymerblock (S/B) der Komponente A) unter 20 % beträgt.

8. Schalldämmplatte nach einem der Ansprüche 2 bis 7, **dadurch gekennzeichnet, dass** sie als anorganischen Füllstoff Titandioxid, Talk, Kreide, Kaolin, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Wollastonit, Glimmer, Magnetite, Zinkoxid, Antimontrioxid oder Farbpigmente enthält.

9. Verfahren zur Herstellung einer Schalldämmplatte, **dadurch gekennzeichnet, dass** man die Komponenten A) bis D) gemäß einem der Ansprüche 1 bis 8 in der Schmelze mischt und extrudiert.

10. Verwendung der Schalldämmplatte nach einem der Ansprüche 1 bis 8 zur Kaschierung auf Lautsprecher-, Elektrogeräte- oder Kraftfahrzeug-Gehäusen oder Gehäuseteilen.
